# EUROPÄISCHE PATENTSCHRIFT

(11) **EP 0 510 354 B1**
(45) Veröffentlichungstag und Bekanntmachung des Hinweises auf die Patenterteilung: **20.12.2000**
(21) Anmeldenummer: 92104624.9
(22) Anmeldetag: 18.03.1992
(51) Int. Cl.: G06F 13/40

(54) **Verfahren zur Überwachung der Funktion einer Busankopplungseinheit**
Method of monitoring the operation of a bus coupler
Méthode de surveillance du fonctionnement d'un coupleur de bus

(30) Priorität: 24.04.1991 DE 4113321
(43) Veröffentlichungstag der Anmeldung: 28.10.1992
(73) Patentinhaber: GEBRÜDER MERTEN GMBH & CO. KG, D-51643 Gummersbach (DE)
(72) Erfinder: Becker, Erwin, W-5630 Remscheid 1 (DE)
(74) Vertreter: Selting, Günther, Dipl.-Ing.

(56) Entgegenhaltungen:
- US-A- 4 263 647
- US-A- 4 959 833

## Beschreibung

Bei Systemen der Hausleittechnik, bei denen zahlreiche Busankopplungseinheiten mit einem Datenbus verbunden sind und bei denen jede Busankopplungseinheit mit mindestens einem Gerät verbunden ist, können die angeschlossenen Geräte Informationen oder Befehle an den Datenbus abgeben sowie auch Informationen oder Befehle von dem Datenbus empfangen. Es ist somit möglich, Geräte nach ihrem Betriebszustand oder nach anderen Parametern abzufragen und die gewonnenen Informationen an ein anderes Gerät zu liefern. Auf diese Weise können Steuer- und Regelfunktionen ausgeführt werden. Beispielsweise besteht eines der Geräte aus einem Temperaturfühler und ein anderes Gerät aus dem Regler einer Heizung. Beide Geräte können über den Datenbus miteinander kommunizieren, d.h. Befehle und Informationen austauschen. Im einfachsten Fall besteht ein solches an ein Hausleitsystem angeschlossenes Gerät aus einem Schalter, der über das Hausleitsystem gesteuert wird und dessen Betriebszustand über das Hausleitsystem abgefragt werden kann.

Die in solchen Hausleitsystemen verwendeten Busankopplungseinheiten, die jeweils dazu dienen, den Verkehr der Geräte mit dem Datenbus zu ermöglichen, sind komplexe Einheiten, die einen Mikroprozessor enthalten und die die Aufgabe haben, die Daten für die Übertragung über den Datenbus zu Telegrammen aufzubereiten und die ferner die Aufgabe haben, solche über den Datenbus ankommende Telegramme zu empfangen und in verarbeitbare Befehle oder Informationen umzusetzen. Die Busankopplungseinheiten führen einen Busdialog mit dem Datenbus und einen Gerätedialog mit dem angeschlossenen Gerät. Die komplexen Funktionen der Busankopplungseinheiten haben zur Folge, daß Fehler auftreten können. In einem Hausleitsystem mit Hunderten von Busankopplungseinheiten kann es vorkommen, daß ein Fehler in nur einer Busankopplungseinheit das gesamte Hausleitsystem außer Funktion setzt. Dies wäre beispielsweise dann der Fall, wenn die betreffende Busankopplungseinheit den Datenbus ständig belegt und somit anderen Busankopplungseinheiten den Zugang zum Datenbus verwehrt. Fehler in einer Busankopplungseinheit können auf physische Fehler des Mikroprozessors zurückzuführen sein oder auch auf Fehler in den Software-Funktionen. So ist es beispielsweise möglich, daß in einer Busankopplungseinheit eine Routine in Form einer Schleife ständig neu ausgeführt wird und daß dadurch der Datenbus blockiert wird.

EP 0 255 069 beschreibt eine Schaltungsanordnung zur seriellen Datenübertragung, wobei die Teilnehmerstellen oder Busankopplungseinheiten jeweils eine Zeitschaltung aufweisen, mit deren Hilfe eine fehlerhafte Belegung des Busses aufhebbar ist. In jeder Busankopplungseinheit wird bei jedem Aufruf die Dauer der Datenaussendung überwacht. Überschreitet die Dauer der auf einen Aufruf folgenden Datenaussendung eine vorbestimmte Wartezeit, so wird die Anschaltung der Busankopplungseinheit an den Datenbus zwangsweise unterbrochen. Hierdurch kann jedoch nur der Busdialog, also der Dialog der Busankopplungseinheit mit dem Bus, überwacht werden. Sonstige Fehlfunktionen, beispielsweise im Gerätedialog, bleiben unerkannt.

Ein Verfahren nach dem Oberbegriff des Patentanspruchs 1 ist bekannt aus US-A-4 263 647. Darin ist ein Multiprozessor-Steuersystem beschrieben, bei dem jedem Prozessor eine Watchdog-Timer-Schaltung zugeordnet ist, die unter normalen Betriebsbedingungen von ihrem Prozessor periodisch rückgesetzt wird. Im Falle einer Fehlfunktion in einem der Prozessoren wird dessen Watchdog-Timer nicht rückgesetzt und läuft aus. Daraufhin wird ein Fehlersignal abgegeben. Hiermit können Fehlfunktionen im Busdialog festgestellt werden.

Der Erfindung liegt das Problem zugrunde, ein Verfahren zur Überwachung der Funktion einer Busankopplungseinheit anzugeben, bei dem Fehlfunktionen sowohl im Busdialog als auch im Gerätedialog auf einfache Weise erkannt werden.

Die Lösung dieser Aufgabe erfolgt erfindungsgemäß mit den im Patentanspruch 1 angegebenen Merkmalen.

Bei dem erfindungsgemäßen Verfahren, bei dem der Busdialog Vorrang vor dem Gerätedialog hat, erfolgt eine Prüfung der Durchführung des Gerätedialogs. Zwei (gegenüber den Busdialogen nachrangige) Gerätedialoge müssen innerhalb einer vorbestimmten Zeit aufeinander folgen. Wenn dies nicht der Fall ist, wird ein Störungssignal erzeugt. Ein Störungssignal wird ebenfalls erzeugt, wenn die Dauer eines Gerätedialogs eine vorgegebene Zeitspanne übersteigt. Dann werden nämlich die Kontrollsignale, von denen in jedem Gerätedialog mindestens eines vorkommt, nicht mit der erforderlichen Häufigkeit erzeugt.

Bei dem erfindungsgemäßen Verfahren wird durch ausschließliche Überwachung des Gerätedialogs festgestellt, ob diejenigen Funktionen richtig ablaufen, die sowohl den Gerätedialog als auch den Busdialog betreffen. Die Datenübertragung über den Datenbus ist so organisiert, daß bei vollständiger Belegung, d.h. wenn ständig Datenübertragungen erfolgen, zwischen den einzelnen Übertragungen oder Telegrammen Pausen vorhanden sind, in denen die Busankopplungseinheiten ihren Gerätedialog ausführen oder fortsetzen können. Der Gerätedialog besteht aus einer Folge von nacheinander durchzuführenden Routinen. Nach Beendigung der Pause der Busübertragung wird die Busübertragung fortgesetzt und der Gerätedialog unterbrochen. Durch die Pausen ist sichergestellt, daß selbst bei maximaler Busbelegung die angeschlossenen Busankopplungseinheiten immer noch Zeit für den Gerätedialog haben.

Während des Busdialogs und während des Gerätedialogs werden jeweils mehrere Programmroutinen ausgeführt, die in Abhängigkeit von gefundenen Zuständen unterschiedliche Zeitdauern beanspruchen können. Durch die Zeitüberwachung der Gerätedialoge wird sichergestellt, daß weder ein Gerätedialog noch ein Busdialog eine vorgegebene Zeit überschreiten kann, ohne daß dies zur Erzeugung eines Störsignals führt.

Sollte eine der Busankopplungseinheiten defekt sein und eine Dauerbelegung des Busses ohne die vorgesehenen Pausenzeiten zu bewirken, oder der Datenbus überlastet sein, so führt dies dazu, daß in keiner Busankopplungseinheit ein Busdialog mehr geführt werden kann. In diesem Fall wird ein Störungssignal erzeugt.

Das Störungssignal steuert im einfachsten Fall eine Anzeigeleuchte, so daß eine nicht betriebsbereite Busankopplungseinheit erkennbar ist. Es ist auch möglich, ein akustisches Warnsignal zu erzeugen oder Schaltvorgänge durchzuführen. Beispielsweise kann das angeschlossene Gerät dann, wenn die Busankopplungseinheit ein Störungssignal erzeugt, abgeschaltet oder in einen vorbestimmten Betriebsmodus geschaltet werden, bei dem keine Gefährdung oder Zerstörung auftreten kann.

Die Busankopplungseinheit enthält normalerweise einen Mikroprozessor, einen Festwertspeicher und einen löschbaren Speicher (EPROM oder RAM). Mit diesen Komponenten wird sowohl der Busdialog als auch der Gerätedialog durchgeführt. Die zeitliche Auswertung der Kontrollsignale erfolgt zweckmäßigerweise unabhängig von der Funktion des Prozessors und außerhalb von diesem. Auf diese Weise wird sichergestellt, daß im Falle einer Fehlfunktion des Prozessors die Überwachungsfunktion nicht beeinträchtigt wird. Für die Durchführung der Überwachungsfunktion kann im einfachsten Fall eine monostabile Kippstufe verwendet werden, die von den Kontrollsignalen in den Setz-Zustand gesteuert wird und die eine vorbestimmte Laufdauer hat. Trifft innerhalb der Laufdauer das nächstfolgende Kontrollsignal ein, so beginnt die Laufdauer der Kippstufe von neuem. Bei ordnungsgemäßer Aufeinanderfolge der Kontrollsignale bleibt die Kippstufe also im Setz-Zustand, in dem die Erzeugung des Störungssignals unterdrückt wird.

Im folgenden wird unter Bezugnahme auf die Zeichnungen ein Ausführungsbeispiel der Erfindung näher erläutert.

Es zeigen:
- Fig. 1: ein schematisches Blockschaltbild eines Abschnitts aus einem Hausleitsystem, bei dem Geräte jeweils über eine Busankopplungseinheit mit einem Datenbus verbunden sind,
- Fig. 2: eine schematische Darstellung der Busankopplungseinheit und deren Aufteilung in Busdialog und Gerätedialog,
- Fig. 3: den zeitlichen Ablauf von Busaktivitäten, Busdialog und Gerätedialog in der Busankopplungseinheit sowie das daraufhin erzeugte Kontrollsignal, das hier ein einfacher Setz-Impuls ist,
- Fig. 4: ein schematisches Flußdiagramm des Gerätedialogs,
- Fig. 5: in zeitlich verändertem Maßstab die Kontrollimpulse und das bei ihrem Ausbleiben entstehende Störungssignal,
- Fig. 6: ein Ausführungsbeispiel mit Umschaltung der Betriebsart des mit der Busankopplungseinheit kommunizierenden Gerätes im Falle der Erzeugung des Störungssignals,
- Fig. 7: ein Ausführungsbeispiel, bei dem die Überwachungsfunktion von einer Gerätesteuerung durchgeführt wird,
- Fig. 8: ein weiteres Ausführungsbeispiel der Kommunikation zwischen Busankopplungseinheit und Gerät,
- Fig. 9: die parallele Übertragung von Daten auf dem Überwachungskanal nach Fig. 8,
- Fig. 10: ein Zeitdiagramm der auf dem Überwachungskanal übertragenen Impulse, und
- Fig. 11: ein generelles Blockschaltbild der Übertragung und Auswertung des Kontrollsignals.

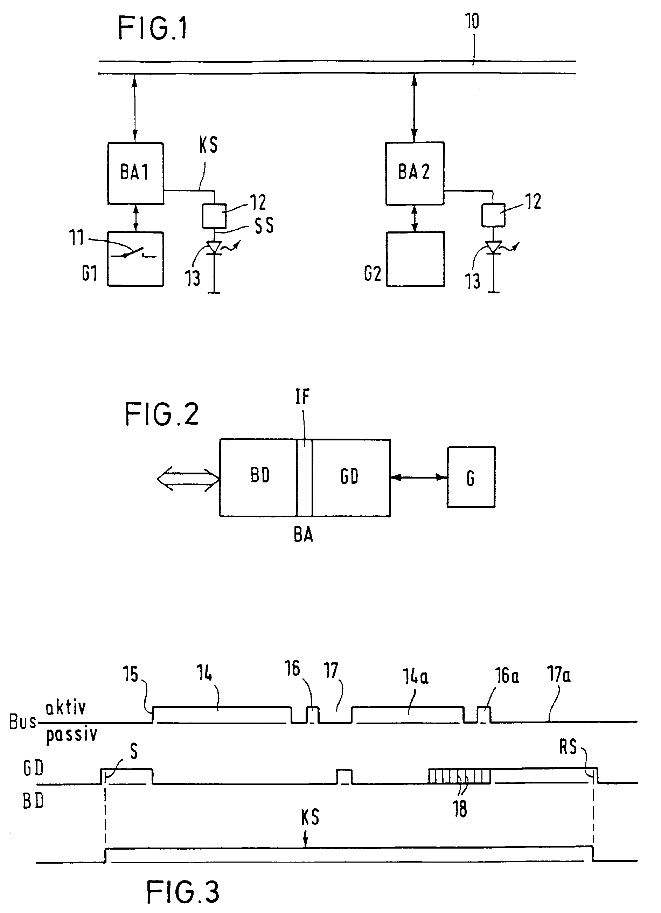

Bei dem Hausleitsystem, von dem ein Abschnitt in Fig. 1 dargestellt ist, ist ein serieller Datenbus 10 vorhanden, an den an verschiedenen Stellen einzelne Busankopplungseinheiten BA1,BA2... angeschlossen sind. Jede dieser Busankopplungseinheiten enthält unter anderem einen Mikroprozessor und einen löschbaren Speicher. Jede Busankopplungseinheit ist mit einem Gerät G1,G2... verbunden. Das Gerät G1 besteht hier aus einem einfachen Schalter 11, der einen (nicht dargestellten) Stromverbraucher ein- und ausschalten kann und der manuell betätigt wird. Die Position des Schalters 11 soll ermittelt und über die Busankopplungseinheit BA1 sowie über den Datenbus 10 an eine andere Stelle übertragen werden. Bei dem Hausleitsystem ist keine zentrale Steuerungseinheit vorhanden. Die gesamte Datenübertragung wird von den Busankopplungseinheiten durchgeführt, die jeweils entsprechend "Startpunkt" und "Zielpunkt" programmiert sind.

Jede Busankopplungseinheit ist mit einem externen Zeitgerät 12 verbunden, das nachfolgend noch erläutert wird und das eine Warnleuchte 13 steuert, die hier aus einer LED besteht.

In Fig. 3 ist in der obersten Zeile die Belegung des Datenbusses 10 mit Datentelegrammen dargestellt. Ein Datentelegramm 14 besteht aus einem Startsignal 15 und aus einer seriellen Impulsfolge, die bestimmte Informationen enthält, unter anderem Informationen über diejenige Stelle, die das Datentelegramm ausgesandt hat, Informationen über diejenigen Stelle, für die das Datentelegramm bestimmt ist, sowie weitere Informationen, die den eigentlichen Inhalt des Datentelegramms bilden. Die über den Datenbus übertragenen Datentelegramme werden von allen Busankopplungseinheiten empfangen und nur diejenige Busankopplungseinheit, für die das Telegramm bestimmt ist, reagiert darauf. Nachdem die für den Empfang bestimmte Busankopplungseinheit das Datentelegramm 14 empfangen hat, gibt sie an den Datenbus ein Quittiersignal 16 ab, das von der aussendenden Busankopplungseinheit empfangen und erkannt wird. Daraufhin folgt eine Pause 17 von vorbestimmter Dauer. Nach Beendigung der Pause 17 kann eine beliebige Busankopplungseinheit ein weiteres Datentelegramm 14a aussenden, das anschließend von der für den Empfang bestimmten Busankopplungseinheit mit einem Quittiersignal 16a quittiert wird. In Fig. 3 erfolgt das Datentelegramm 14a im kürzestmöglichen zeitlichen Abstand auf das Datentelegramm 14. Nach dem Datentelegramm 14a tritt eine längere Pause 17a ein, in der keine der Busankopplungseinheiten den Datenbus belegt.

Gemäß Fig. 2 kann die Busankopplungseinheit BA hinsichtlich ihrer Funktion aufgeteilt werden in Busdialog BD, Gerätedialog GD und Schnittstellenfunktion IF. Alle diese Funktionen werden von dem Mikroprozessor ausgeführt. Die Darstellung in Fig. 2 soll verdeutlichen, daß der Busdialog zwischen der Busankopplungseinheit BA und dem Datenbus 10 stattfindet, während der Gerätedialog GD zwischen der Busankopplungseinheit BA und dem betreffenden Gerät G stattfindet. Der Busdialog BD umfaßt unter anderem das Aussenden oder Empfangen von Datentelegrammen sowie ferner auch interne Steuerungsfunktionen. Während des Busdialoges werden mehrere Programmroutinen durchgeführt, wobei u.a. eine Aufbereitung der auszusendenden oder empfangenen Signale erfolgt. Die Funktionen Busdialog und Gerätedialog werden jeweils abwechselnd durchgeführt, wobei der Busdialog den Vorrang hat. Beide Dialoge können nicht gleichzeitig ausgeführt werden.

In der zweiten Zeile von Fig. 3 ist für die in der obersten Zeile dargestellten Zustände des Datenbusses diejenige Funktion BD oder GD dargestellt, die von der Busankopplungseinheit BA ausgeführt wird. Dabei ist angenommen, daß das erste Datentelegramm 14 gerade ankommt, während ein Gerätedialog GD läuft. Bei diesem Gerätedialog kommuniziert die betreffende Busankopplungseinheit BA mit dem zugehörigen Gerät G. Der Gerätedialog GD wird durch das Eintreffen des Startsignals 15 des Datentelegramms 14 unterbrochen und in der Pause 17 zwischen den in kürzester Zeit aufeinanderfolgenden Datentelegrammen 14 und 14a fortgesetzt. In dem Diagramm der Fig. 3 ist angenommen, daß das Datentelegramm 14 für die betreffende Busankopplungseinheit bestimmt ist, während das Datentelegramm 14a für eine andere Busankopplungseinheit bestimmt ist. Daher wird, nachdem die Busankopplungseinheit erkannt hat, daß das Datentelegramm 14a nicht für sie bestimmt ist, der Gerätedialog GD fortgesetzt, während das Datentelegramm 14a noch läuft. Dabei treten kurzzeitige Unterbrechungen 18 ein, die durch die Pausen zwischen den Bytes des Datentelegramms 14a verursacht werden. Danach wird der Gerätedialog GD in der längeren Pause 17a fortgesetzt, bis er abgeschlossen ist.

Kurz nach Beginn des Gerätedialogs GD wird ein Setz-Signal S erzeugt, das den Beginn eines Kontrollimpulses KI angibt, der in der untersten Zeile von Fig. 3 dargestellt ist und hier das Kontrollsignal KS bildet. Der Kontrollimpuls KI wird kurz vor dem Ende des Gerätedialogs GD beendet.

Zur Verdeutlichung des Zeitmaßstabes in Fig. 3 sei angegeben, daß die Datentelegramme 14 bzw. 14a jeweils eine Dauer von etwa 8 ms haben. Während des Gerätedialogs erfolgt die Kommunikation zwischen der Busankopplungseinheit und dem betreffenden Gerät. Bei dem angenommenen einfachsten Fall, daß das Gerät lediglich ein Schalter 11 ist, dessen Position ermittelt werden soll, erfolgt die Ermittlung der Schalterstellung. Es ist aber auch möglich, komplexere Daten zu erfassen. Ferner kann während des Gerätedialogs ein Steuerbefehl von der Busankopplungseinheit an das Gerät gegeben werden oder es können beliebige Informationen ausgetauscht werden.

Gemäß Fig. 1 wird das Kontrollsignal KS dem Zeitgerät 12 zugeführt. Dieses besteht z.B. aus einer monostabilen Kippstufe mit einer vorbestimmten Laufdauer Tₐ. Durch jede Vorderflanke eines Kontrollimpulses KI, bzw. durch das Setz-Signal S, das diese Vorderflanke erzeugt hat, wird die Kippstufe 12 in den Setz-Zustand gebracht, den sie solange beibehält, bis die Zeit Tₐ abgelaufen ist. Trifft zwischenzeitlich die Vorderflanke eines neuen Kontrollimpulses KI ein, wenn die Zeit Tₐ noch nicht abgelaufen ist, so wird der Beginn des Ablaufs erneuert und die Zeit Tₐ beginnt von neuem zu laufen, ohne daß die Kippstufe zurückfällt. Wenn die Kippstufe zurückfällt, wird die Leuchte 13 erregt, die einen fehlerhaften Betriebszustand der Busankopplungseinheit anzeigt.

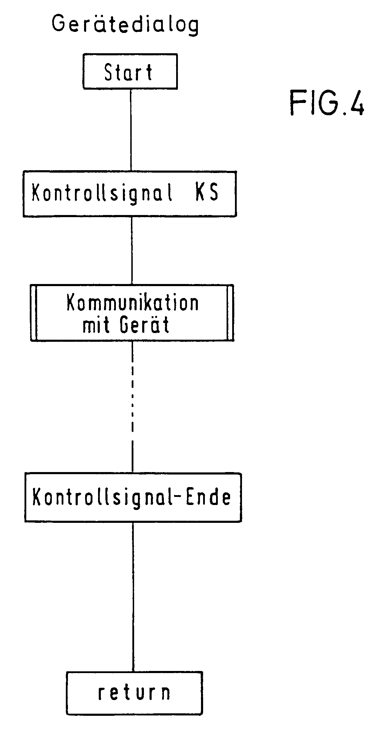

Fig. 4 zeigt schematisch den Ablauf des Gerätedialogs. Der Programmablauf beginnt mit dem Befehl "Start". Darauf erfolgt die Erzeugung des Kontrollsignals KS und dann die Kommunikation mit dem Gerät G, wobei mehrere unterschiedliche Routinen ablaufen können. Nach dem Abarbeiten dieser Routinen wird durch das Rücksetz-Signal RS das Kontrollsignal-Ende angegeben. Dann erfolgt eine Pause von z.B. 2 ms Dauer und schließlich kehrt der Ablauf an den Start zurück, so daß ein neuer Gerätedialog ausgeführt wird.

Die Haltezeit Tₐ des Zeitgeräts 12 ist viel größer als die Dauer eines Gerätedialogs GD oder eines Datentelegramms. Sie ist normalerweise um mindestens den Faktor 100 größer als ein Datentelegramm und richtet sich im wesentlichen danach, wie lange das angeschlossene Gerät imstande ist, ohne Gefahr mit einer defekten Busankopplungseinheit zusammenzuarbeiten. Beispielsweise beträgt die Zeit Tₐ etwa 1 bis 3 sec.

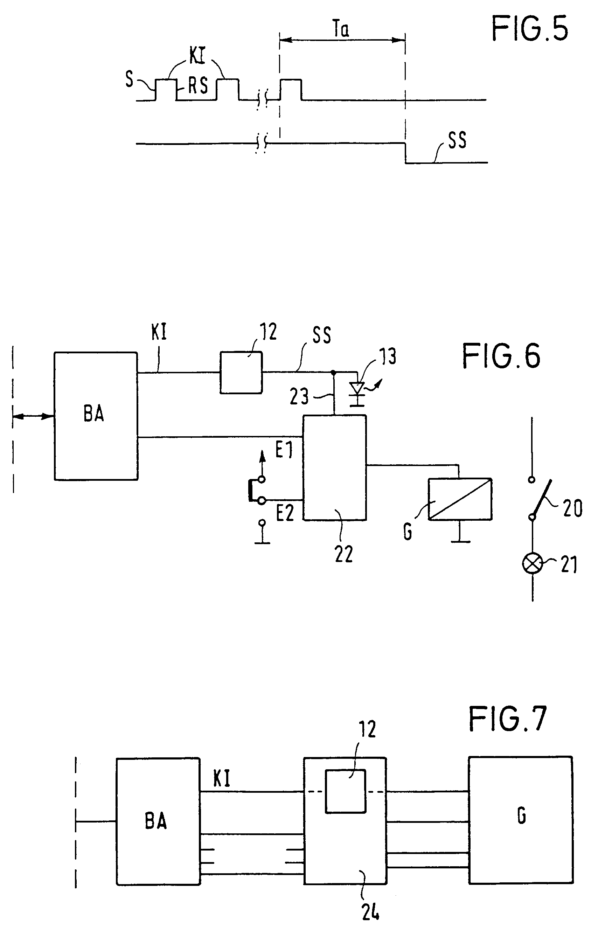

Fig. 5 zeigt in einem veränderten Zeitmaßstab das Auftreten von Kontrollimpulsen KI, die jeweils mit einem Setz-Signal S beginnen und mit einem Rücksetz-Signal RS enden. Jede Vorderflanke eines Kontrollimpulses stößt das Zeitgerät 12 von neuem an. Dieses Ausgangssignal ist in der unteren Zeile von Fig. 5 dargestellt. Wenn nach einem Setz-Signal S die Zeit Tₐ abläuft, ohne daß ein neues Setz-Signal erfolgt, fällt das Ausgangssignal des Zeitgerätes ab und es wird das Störsignal SS erzeugt, wodurch der Zustand der Leuchte 13 invertiert wird.

Fig. 6 zeigt ein Ausführungsbeispiel, bei dem das Gerät G ein Relais ist, welches einen Kontakt 20 schaltet, um einen Verbraucher 21 an eine Stromquelle anzuschließen. Zwischen die Busankopplungseinheit BA und den Verbraucher G ist ein Selektor 22 geschaltet, der zwei selektierbare Eingänge E1 und E2 hat und dessen Ausgang das Gerät G steuert. Das Ausgangssignal des Zeitgerätes 12 wird dem Selektionseingang 23 des Selektors 22 zugeführt. Der erste Eingang E1 ist mit der Busankopplungseinheit BA verbunden, während der zweite Eingang E2 an einem wählbaren vorbestimmten Potential liegt.

Wenn das Zeitgerät 12 sich im Setz-Zustand befindet, also wenn das Störsignal SS nicht erzeugt wird, verbindet der Selektor 22 das Gerät G mit dem ersten Eingang E1. Wird dagegen das Störsignal SS erzeugt, so wird diese Verbindung unterbrochen und das Gerät G wird mit dem zweiten Eingang E2 verbunden. Auf diese Weise wird erreicht, daß einer Funktionsstörung der Busankopplungseinheit das Gerät G in einer bestimmten vorgegebenen Betriebsart betrieben wird.

Bei dem Ausführungsbeispiel von Fig. 7 ist zwischen die Busankopplungseinheit BA und das Gerät G eine Gerätesteuerung 24 geschaltet, die das Gerät G bedient. Diese Gerätesteuerung enthält unter anderem die Funktion des Zeitgerätes 12, so daß auch hier das Zeitgerät 12 außerhalb der Busankopplungseinheit BA angeordnet ist und von einer Fehlfunktion der Busankopplungseinheit nicht betroffen wird.

Bei den bisher beschriebenen Ausführungsbeispielen bestand das Kontrollsignal entweder aus einem einfachen Setz-Impuls oder aus dem Kontrollimpuls KI, der sich über die Dauer einer Dialogeinheit des Gerätedialogs GD erstreckt. Bei dem nachfolgend beschriebenen Ausführungsbeispiel besteht das Kontrollsignal aus einer Kontrollsequenz mit einer vorbestimmten Folge von m Binärsignalen. Das Kontrollsignal kann auch mehrere Kontrollsequenzen umfassen, die gleichzeitig oder nacheinander übertragen werden. Die Verwendung einer oder mehrerer Kontrollsequenzen mit vorbestimmten Impulsmuster ermöglicht eine bessere Erkennung von Fehlern und erhöht die Sicherheit der Auswertung.

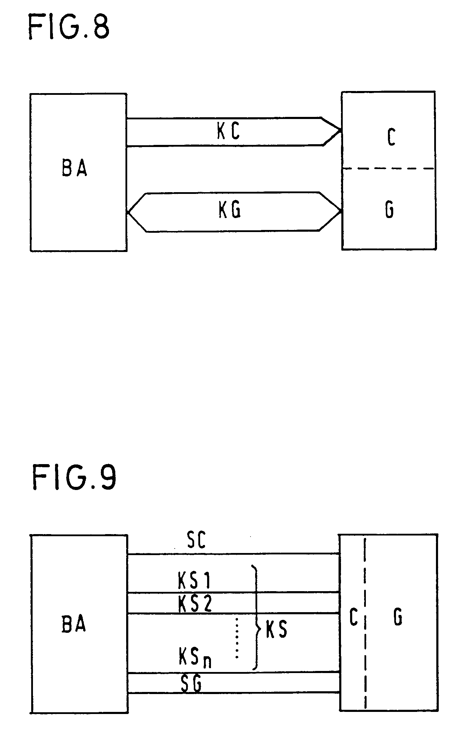

Gemäß Fig. 8 wird der Dialog zwischen der Busankopplungseinheit BA und dem Gerät G über Kanäle (im nachrichtentechnischen Sinn) abgewickelt, wobei mindestens Kanal KC zur Übermittlung des Kontrollsignals KS bereitsteht. Das Kontrollsignal besteht aus mindestens einer Kontrollsequenz. Die Auswertung der empfangenen Kontrollsignale erfolgt in dem Steuerteil C des Gerätes. Über einen weiteren Kanal KG erfolgt der Gerätedialog zwischen Busankopplungseinheit BA und Gerät G.

Die beiden Kanäle KC und KG können durch getrennte Leitungen realisiert werden, jedoch ist es auch möglich, für beide Kanäle nur eine einzige Leitung vorzusehen und die Übertragung z.B. im Zeitmultiplex-Betrieb vorzunehmen. Die Überwachungseinrichtung C im Gerät G empfängt die über den Kanal KC kommenden Kontrollsignale KS und erzeugt das oben schon erläuterte Störungssignal.

Fig. 9 zeigt diejenigen Daten, die von der Busankopplungseinheit BA zum Kontrollteil C des Gerätes übertragen werden. Zu diesen Signalen gehört ein Selektionssignal SC zum Selektieren des Kontrollteils C des Gerätes, sowie ein Selektionssignal SG zum Selektieren des Kanals KG über den der Gerätedialog abgewickelt wird. Beide Selektionssignale SC und SG können nicht gleichzeitig aktiv sein. Das Kontrollsignal KS, das von der Busankopplungseinheit zum Kontrollteil C des Gerätes übertragen wird, besteht aus n-Kontrollsequenzen KS1,KS2 ..., KSn.

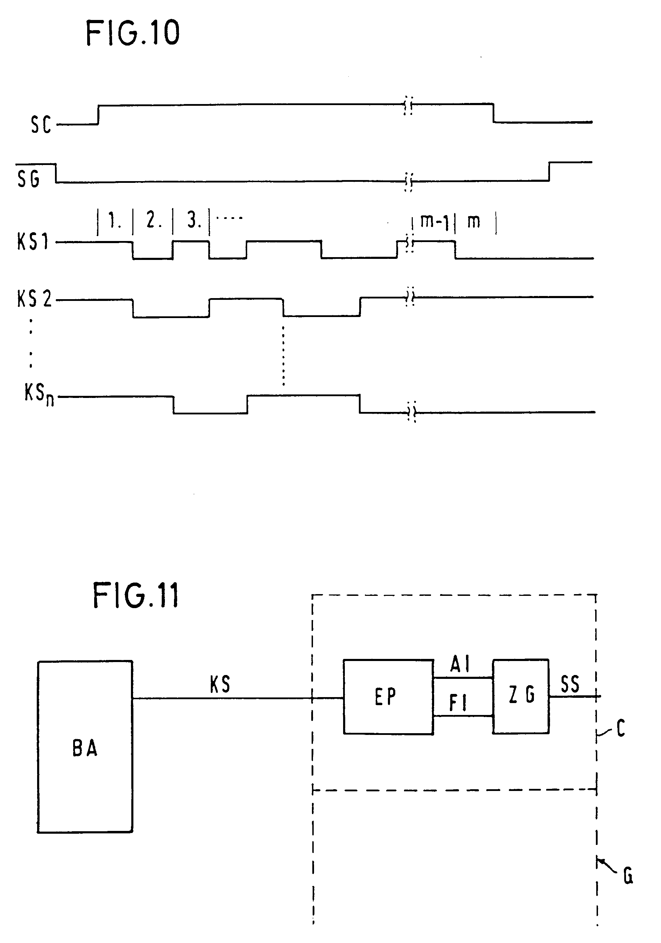

Fig. 10 zeigt die zeitlichen Verläufe der Selektionssignale SC und SG sowie der Kontrollsequenzen KS1, KS2 ... KSn in dem Fall, daß der Kontrollkanal KC aktiv ist, während der Gerätedialog unterbrochen und daher der Kanal KG inaktiv ist. Jede Kontrollsequenz KS1, ..., KSn besteht aus einer Anzahl von m Binärsignalen oder Bits, wobei für jede Kontrollsequenz ein anderes Bitmuster festgelegt ist. Der Kontrollteil C empfängt somit insgesamt n . m Bits und überprüft das daraus bestehende Datenwort, das das Kontrollsignal KS bildet, auf Korrektheit. Etwaige Übertragungsfehler werden erkannt, bzw. führen nicht zur Erkennung des richtigen Kontrollsignals.

Der Kontrollteil C des Gerätes G enthält eine Empfangs- und Prüfeinrichtung EP, die das Kontrollsignal KS von der Busankopplungseinheit BA empfängt und auf Vollständigkeit und Richtigkeit überprüft. Die Empfangs- und Prüfeinrichtung gibt an das dem Zeitglied 12 entsprechende Zeitgerät CG jedesmal dann einen Anstoß-Impuls AI, wenn ein Kontrollsignal KS erkannt wurde. Wird dagegen ein unvollständiges oder verstümmeltes Kontrollsignal KS erkannt, dann liefert die Empfangs- und Prüfeinrichtung EP einen Fehlerimpuls FI an das Zeitgerät ZG. Das Zeitgerät ZG erzeugt das Störsignal SS, wenn über die eingestellte Zeitspanne Tₐ nach Empfang des letzten Anstoß-Impulses AI kein neuer Anstoßimpuls auftritt, oder wenn der Fehlerimpuls FI auftritt.

## Patentansprüche

1. Verfahren zur Überwachung der Funktion einer Busankopplungseinheit (BA), die zur Kommunikation zwischen einem Gerät (G) und einem Datenbus (10) einen Busdialog (BD) mit dem Datenbus und einen Gerätedialog (GD) mit dem Gerät (G) ausführt, wobei der Busdialog Vorrang vor dem Gerätedialog hat und ein Gerätedialog immer dann ausgeführt werden kann, wenn kein Busdialog ansteht,
**dadurch gekennzeichnet,**
daß im Busdialog bei vollständiger Belegung zwischen den einzelnen Übertragungen oder Telegrammen Pausen vorhanden sind, in denen die Busankopplungseinheiten ihren Gerätedialog ausführen oder fortsetzen können, daß der Gerätedialog derart ausgeführt wird, daß in seinem Verlauf mindestens ein Kontrollsignal (KS) erzeugt wird, und daß nach Ablauf einer vorgegebenen Zeitspanne (Tₐ) nach dem Beginn des Kontrollsignals (KS), oder nach dem Erkennen eines Kontrollsignals durch den Empfänger, ein Störungssignal erzeugt wird, wenn nicht ein neues Kontrollsignal erkannt wird.

2. Verfahren nach Anspruch 1, dadurch gekennzeichnet, daß das Kontrollsignal (KS) eine Kontrollsequenz (KS1...KSn) aus einer vorbestimmten Folge von m Binärsignalen ist, wobei m größer ist als 1.

3. Verfahren nach Anspruch 2, dadurch gekennzeichnet, daß n Kontrollsequenzen übertragen werden, wobei n größer ist als 1.

4. Verfahren nach Anspruch 1, dadurch gekennzeichnet, daß das Kontrollsignal (KS) durch ein Setz-Signal (S) eingeleitet wird oder aus diesem Setz-Signal besteht.

5. Verfahren nach Anspruch 4, dadurch gekennzeichnet, daß im Verlauf des Gerätedialogs (GD) auch ein Rücksetz-Signal (RS) erzeugt wird, wobei das Setz-Signal den Anfang und das Rücksetz-Signal das Ende eines Kontrollimpulses (KI) bestimmt.

6. Verfahren nach Anspruch 5, dadurch gekennzeichnet, daß das Setz-Signal (S) nach dem Anfang und das Rücksetz-Signal (RS) vor dem Ende eines jeden Gerätedialogs (GD) erzeugt werden oder umgekehrt.

7. Verfahren nach einem der Ansprüche 1 bis 6, dadurch gekennzeichnet, daß der Gerätedialog (GD) und der Busdialog (BD) von einem Prozessor gesteuert werden, der das Kontrollsignal (KS) ausgibt, und daß die Auswertung der Kontrollsignale unabhängig von der Funktion des Prozessors und außerhalb von diesem erfolgt.

8. Verfahren nach einem der Ansprüche 1 bis 7, dadurch gekennzeichnet, daß der Gerätedialog (GD) jedesmal unterbrochen wird, wenn ein Busdialog (BD) ansteht, und anschließend fortgesetzt wird.

9. Verfahren nach einem der Ansprüche 1 bis 8, dadurch gekennzeichnet, daß das Störungssignal (SS) einen Selektor (22) steuert, der bei Erzeugung des Kontrollsignals, bzw. des Störungssignals (SS), das Gerät (G) auf eine vorbestimmte Betriebsart einstellt oder abschaltet.

10. Verfahren nach einem der Ansprüche 1 bis 9, dadurch gekennzeichnet, daß die Busankopplungseinheit bei Auftreten eines Störungssignals (SS) von dem Datenbus (10) abgeschaltet wird.

11. Verfahren nach einem der Ansprüche 1 bis 10, dadurch gekennzeichnet, daß der Busdialog (BD) außer der Kommunikation mit dem Datenbus (10) Steuer- oder Überwachungsroutinen innerhalb der Busankopplungseinheit (BA) umfaßt.

## Claims

1. A method for monitoring the function of a bus coupling unit (BA) which, for communication between an apparatus (G) and a data bus (10), performs a bus dialog (BD) with the data bus and an apparatus dialog (GD) with the apparatus (G), the bus dialog having priority over the apparatus dialog, and an apparatus dialog being possible to execute when no bus dialog is pending,
characterized in
that, when fully busy, pauses are provided in the bus dialog between the individual transmissions or telegrams, during which the bus coupling units can perform or continue their apparatus dialog, that the apparatus dialog is performed such that at least one control signal (KS) is generated during its course, and that after the lapse of a predetermined time (Tₐ) after the beginning of the control signal (KS) or after the detection of a control signal by the receiver, a failure signal is generated if no new control signal is detected.

2. The method of claim 1, characterized in that the control signal (KS) is a control sequence (KS1...KSn) of a predetermined sequence of m binary signals, where m is greater than 1.

3. The method of claim 2, characterized in that n control sequences are transmitted, where n is greater than 1.

4. The method of claim 1, characterized in that the control signal (KS) is initiated by a set signal (S) or that it is the set signal.

5. The method of claim 4, characterized in that in the course of the apparatus dialog (GD) also a reset signal (RS) is generated, the set signal defining the start and the reset signal defining the end of a control pulse (KI).

6. The method of claim 5, characterized in that the set signal (S) is generated after the start of each apparatus dialog (GD) and the reset signal (RS) is generated before the end of each apparatus dialog (GD), or vice versa.

7. The method of one of claims 1 to 6, characterized in that the apparatus dialog (GD) and the bus dialog (BD) are controlled by a processor that outputs the control signal (KS), and that the evaluation of the control signal is effected independent of the function of the processor and external of the processor.

8. The method of one of claims 1 to 7, characterized in that the apparatus dialog (GD) is interrupted every time a bus dialog (BD) is pending and is continued subsequently.

9. The method of one of claims 1 to 8, characterized in that the failure signal (SS) controls a selector (22) which, when the control signal or the failure signal (SS) is generated, sets the apparatus (G) in a predetermined mode or switches it off.

10. The method of one of claims 1 to p, characterized in that the bus coupling unit is switched off by the data bus (10) when a failure signal (SS) occurs.

11. The method of one of claims 1 to 10, characterized in that, besides communication with the data bus (10), the bus dialog (BD) also comprises control or monitoring routines within the bus coupling unit (BA).

## Revendications

1. Procédé de surveillance du fonctionnement d'un coupleur de bus (BA) qui exécute, pour la communication entre un appareil (G) et un bus de données (10), un dialogue de bus (BD) avec le bus de données et un dialogue d'appareil (GD) avec l'appareil (G), le dialogue de bus ayant priorité sur le dialogue d'appareil et un dialogue d'appareil pouvant toujours être exécuté lorsqu'il n'y a pas de dialogue de bus,
caractérisé en ce que, dans le dialogue de bus, en cas d'occupation complète, il y a, entre les transmissions individuelles ou télégrammes individuels, des pauses pendant lesquelles les coupleurs de bus peuvent exécuter ou poursuivre leur dialogue d'appareil, en ce qu'on exécute le dialogue d'appareil de manière à produire au moins un signal de contrôle (KS) au cours de son déroulement et en ce qu'on produit un signal de dérangement lorsqu'on ne détecte pas de nouveau signal de contrôle après l'expiration d'un laps de temps prédéterminé (Tₐ) après le début du signal de contrôle (KS) ou après la détection d'un signal de contrôle par le récepteur.

2. Procédé selon la revendication 1, caractérisé en ce que le signal de contrôle (KS) est une séquence de contrôle (KS1 à KSn) composée d'une suite prédéterminée de m signaux binaires, m étant supérieur à 1.

3. Procédé selon la revendication 2, caractérisé en ce qu'on transmet n séquences de contrôle, n étant supérieur à 1.

4. Procédé selon la revendication 1, caractérisé en ce que le signal de contrôle (KS) est déclenché par un signal d'armement (S) ou consiste en ce signal d'armement.

5. Procédé selon la revendication 4, caractérisé en ce que, au cours du dialogue d'appareil (GD), on produit aussi un signal de réinitialisation (RS), le signal d'armement déterminant le début d'une impulsion de contrôle (KI) et le signal de réinitialisation déterminant la fin d'une impulsion de contrôle (KI).

6. Procédé selon la revendication 5, caractérisé en ce qu'on produit le signal d'armement (S) après le début de chaque dialogue d'appareil (GD) et le signal de réinitialisation (RS) avant la fin de chaque dialogue d'appareil (GD), ou inversement.

7. Procédé selon l'une des revendications 1 à 6, caractérisé en ce que le dialogue d'appareil (GD) et le dialogue de bus (BD) sont commandés par un processeur qui délivre le signal de contrôle (KS) et en ce que l'évaluation des signaux de contrôle s'effectue indépendamment du fonctionnement du processeur et en dehors de celui-ci.

8. Procédé selon l'une des revendications 1 à 7, caractérisé en ce qu'on interrompt le dialogue d'appareil (GD) à chaque fois qu'un dialogue de bus (BD) apparaît et qu'on le poursuit ensuite.

9. Procédé selon l'une des revendications 1 à 8, caractérisé en ce que le signal de dérangement (SS) commande un sélecteur (22) qui, lors de la production du signal de contrôle ou du signal de dérangement (SS), règle l'appareil (G) sur un certain mode de fonctionnement ou l'arrête.

10. Procédé selon l'une des revendications 1 à 9, caractérisé en ce que, lors de l'apparition d'un signal de dérangement (SS), on déconnecte le coupleur de bus du bus de données (10).

11. Procédé selon l'une des revendications 1 à 10, caractérisé en ce que le dialogue de bus (BD) comprend outre la communication avec le bus de données (10) des routines de commande ou de surveillance à l'intérieur du coupleur de bus (BA).
